# DEMANDE DE BREVET EUROPEEN

(11) **EP 3 561 540 A1**
(43) Date de publication de la demande: **30.10.2019**
(21) Numéro de dépôt: 19170417.0
(22) Date de dépôt: 19.04.2019
(51) Int. Cl.: G01S 13/02, B60S 1/66, G10K 11/178

(54) **PIÈCE DE CARROSSERIE AVEC UN TRANSDUCTEUR PIÉZOÉLECTRIQUE POUR DÉGIVRAGE**

(30) Priorité: 23.04.2018 FR 1853551
(71) Demandeur: Compagnie Plastic Omnium, 69007 Lyon (FR)
(72) Inventeur: GRANDO, Jérôme, 38390 Vertrieu (FR)
(74) Mandataire: LLR

(57) **Abrégé**

L'invention traite d'une pièce de carrosserie (1) de véhicule automobile. Cette pièce (1) comprend un corps principal (2) en matière plastique ayant au moins une face externe visible depuis l'extérieur du véhicule lorsque la pièce (1) est montée sur le véhicule et une face interne (21) opposée à la face externe et au moins transducteur piézoélectrique (3) configuré pour concentrer une émission d'ondes sonores selon un nombre fini de directions de propagation (A1, A2) sur l'une au moins de la face externe ou de la face interne (21) du corps principal (2) en fonction d'une fréquence d'excitation donnée.

## Description

La présente invention concerne le domaine automobile et plus particulièrement les pièces de carrosserie des véhicules automobiles. L'invention traite plus précisément de la fonction de dégivrage de telles pièces de carrosserie.

Il est connu des systèmes de dégivrage de pièces de carrosserie. Ces systèmes connus intègrent généralement un capteur qui détecte la température ambiante, un capteur de vitesse du véhicule et un élément chauffant. En réponse à une détection d'une température basse résultante des informations obtenues via les deux capteurs et synonyme d'une probable présence de givre, l'élément chauffant est actionné de manière à chauffer la pièce de carrosserie afin de réchauffer la pièce et de faire fondre le givre supposé présent.

Un inconvénient de ces systèmes connus est que le dégivrage est lent, ce qui est préjudiciable pour la sécurité de l'utilisateur du véhicule, notamment lorsque le givre se crée sur le chemin de propagation des ondes d'un radar pouvant aboutir à une mauvaise détection des obstacles, voire même à l'absence de toute détection.

Un second inconvénient de ces systèmes est que le dégivrage est couteux en énergie. De plus, l'élément chauffant est parfois actionné, en réponse à une température ambiante basse détectée, alors qu'aucune couche de givre n'est présente sur la pièce. Il en résulte, dans ce cas précis, un chauffage de la pièce inutile.

Enfin, ces systèmes connus ne permettent pas un dégivrage localisé, sauf à recourir à plusieurs éléments chauffants répartis sur l'ensemble de la pièce, ce qui implique un coût énergétique encore supérieur, une augmentation du coût de fabrication et une complexification du processus de dégivrage.

L'invention a pour but de remédier à ces inconvénients en fournissant une pièce de carrosserie de véhicule automobile, caractérisée en ce qu'elle comprend :
- un corps principal en matière plastique ayant au moins une face externe visible depuis l'extérieur du véhicule lorsque la pièce est montée sur le véhicule, et une face interne opposée à la face externe ;
- au moins un transducteur piézoélectrique configuré pour concentrer une émission d'ondes sonores selon un nombre fini de directions de propagation sur l'une au moins de la face externe ou de la face interne du corps principal en fonction d'une fréquence d'excitation donnée.

Ainsi, la pièce selon l'invention permet un dégivrage rapide et efficace de différentes portions du corps principal grâce à une concentration des ondes sonores générées par le transducteur piézoélectrique de la pièce dans un nombre fini de directions de propagation en fonction d'une fréquence d'excitation donnée. Cette concentration des ondes sonores implique une concentration de l'énergie de cisaillement propagée qui correspond à la vitesse de groupe des ondes émises. Autrement dit, il est possible avec la pièce de l'invention, d'appliquer des forces de cisaillement plus importantes dans certaines portions localisées du corps principal, au niveau de l'interface entre le corps principal et la couche de givre. En effet les fréquences des ondes sonores sont assez élevées pour provoquer cet effet de cisaillement. Par conséquent, les couches de givre présentes dans ces portions du corps principal sont éliminées plus rapidement de manière efficace car elles se détachent du corps principal. De plus, s'ajoute à l'énergie de cisaillement, un effet thermique des ondes émises dans les portions localisées qui créent un échauffement localisé qui participe à l'élimination des couches de givre présentes.

Par « transducteur piézoélectrique », on entend un dispositif capable de se polariser électriquement sous l'action d'une contrainte mécanique et réciproquement de se déformer lorsqu'on lui applique un champ électrique. Un tel transducteur permet la conversion d'une énergie électrique en une énergie mécanique (en l'occurrence l'énergie associée aux ondes sonores émises) et réciproquement. Le transducteur piézoélectrique est apte à être utilisé successivement comme dispositif de réception (capteur) et comme dispositif d'émission (actionneur).

Avantageusement, le nombre fini de directions de propagation est égal à un.

Ainsi, les ondes sonores émises par le transducteur piézoélectrique sont concentrées principalement selon une unique direction de propagation, ce qui signifie que l'énergie transmise par la propagation des ondes est plus importante et se concentre uniquement selon les deux sens de propagation qui constituent la direction de propagation. Dès lors, il est possible d'acheminer de l'énergie vers des portions plus éloignées du corps principal et en quantité plus importante, ces portions étant situées sur une surface du corps principal, autour de l'axe matérialisé par la direction de propagation. Autrement dit, il est possible de cibler deux portions diamétralement opposées et relativement éloignées du transducteur, afin d'y faire parvenir de l'énergie en quantité suffisante pour générer une force de cisaillement permettant de détacher du givre préalablement détecté dans ces portions du corps principal.

Le transducteur piézoélectrique peut également être positionné en bordure du corps principal. Cela permet de cibler une unique portion de la surface du corps principal qui se trouve sur le chemin de propagation des ondes émises dans le sens de propagation d'intérêt, c'est-à-dire le sens de propagation des ondes s'éloignant de la bordure. Ce positionnement du transducteur piézoélectrique permet d'éviter la propagation des ondes émises dans le sens opposé au sens d'intérêt. En effet, de telles ondes peuvent parfois constituer une gêne, par exemple, lors de la présence d'un élément dont le fonctionnement est perturbé par ces ondes émises dans le sens de propagation qui ne permet pas d'atteindre la portion ciblée.

Avantageusement, la pièce comprend au moins un transducteur piézoélectrique additionnel.

Ainsi, dans le cas d'un transducteur piézoélectrique additionnel excité avec une fréquence adéquate permet de générer des ondes qui ont un effet cumulatif avec celles du premier transducteur. Par conséquent, il possible d'acheminer davantage d'énergie de cisaillement vers des portions ciblées du corps principal de la pièce. Cette conclusion est d'autant plus vrai que le nombre de transducteurs excité avec une fréquence adéquate permet de générer des ondes qui ont un effet cumulatif est élevé. En ce sens, le dégivrage de ces portions est plus rapide. Dans un tel cas, il est également possible d'obtenir un dégivrage rapide et efficace avec une concentration d'émission des ondes moins importante du premier transducteur piézoélectrique, grâce à l'effet cumulatif des ondes émises par le transducteur piézoélectrique additionnel.

Avantageusement, le transducteur piézoélectrique additionnel est configuré pour concentrer une émission d'ondes sonores selon un nombre fini de directions de propagation sur le corps principal en fonction d'une fréquence d'excitation donnée.

Ainsi, il est possible de cumuler les énergies liées aux émissions d'ondes sonores concentrées, afin d'obtenir un dégivrage encore plus rapide lorsque deux transducteurs piézoélectriques sont excités à des fréquences permettant que les ondes émises convergent vers la même portion de la surface du corps principal. Il est également possible, avec la pièce selon ce mode de réalisation avantageux, de positionner les deux transducteurs piézoélectriques à des distances plus importantes - par référence à la distance maximale nécessaire pour que deux transducteurs piézoélectriques classiques parviennent à un résultat de dégivrage identique pour la même portion du corps principal - tout en conservant la faculté d'un dégivrage rapide et efficace, lorsque les deux transducteurs piézoélectriques sont excités de manière à ce que leurs ondes convergent vers la même portion avec un effet cumulatif.

Avantageusement, l'un au moins des transducteurs piézoélectriques est fixé sur la face externe ou la face interne du corps principal ou est surmoulé dans le corps principal.

Ainsi, en fonction de l'architecture de la pièce de carrosserie, des contraintes qui lui sont propres ou des contraintes propres aux pièces du véhicule avec lesquelles la pièce interagit, il est possible de choisir le positionnement des transducteurs piézoélectriques de manière à garantir un dégivrage rapide et efficace des portions de la surface du corps principal dont on sait qu'elles ont besoin d'être dégivrées de manière optimisée. Le surmoulage d'un transducteur piézoélectrique dans le corps principal offre une protection accrue de ce transducteur par rapport à un transducteur fixé sur la face interne ou externe du corps principal. Toutefois, un transducteur fixé sur l'une de ces faces peut être plus facilement déplacé ou remplacé, en cas de panne notamment.

Avantageusement, les ondes sonores émises sont des ondes ultrasonores, de préférence des ondes de Lamb.

De telles ondes et leur fréquence d'excitation sont connues, ce qui permet, notamment pour les ondes de Lamb, de concentrer très précisément l'émission d'ondes surfaciques nécessaires pour générer une force de cisaillement suffisante pour atteindre et détacher le givre détecté dans une portion ciblée.

L'invention a aussi pour objet un procédé de dégivrage d'une pièce de carrosserie de véhicule automobile caractérisé en ce qu'il comprend les étapes suivantes :
- détection d'une couche de givre sur au moins une portion d'une face de la pièce ;
- application d'une fréquence d'excitation prédéfinie sur au moins un transducteur piézoélectrique de la pièce en fonction de la position, par rapport audit transducteur, de la portion de la face de la pièce dans laquelle la couche de givre a été détectée, ledit transducteur piézoélectrique étant configuré pour concentrer une émission d'ondes sonores selon un nombre fini de directions de propagation sur la face de la pièce en fonction de la fréquence d'excitation appliquée.

Avantageusement, les fréquences d'excitation d'au moins deux transducteurs piézoélectriques sont appliquées de manière à ce que les transducteurs piézoélectriques émettent des ondes sonores qui convergent vers la portion de la face de la pièce dans laquelle la couche de givre a été détectée et qui ont un effet cumulatif.

Ainsi, l'effet cumulatif des ondes émises par les deux transducteurs piézoélectriques permet l'apport d'une énergie de cisaillement plus importante dans la portion du corps principal comprenant le givre. Par conséquent, le givre peut être détaché plus rapidement.

Avantageusement, l'étape de détection de la couche de givre est réalisée via au moins l'un des transducteurs piézoélectriques.

Avantageusement, le transducteur piézoélectrique qui réalise l'étape de détection de la couche de givre émet des ondes sonores ayant une vitesse de groupe nulle ou sensiblement nulle.

Ainsi, le transducteur piézoélectrique permet, dans ce cas de figure, d'empêcher la diffusion linéaire de l'énergie liée aux ondes sonores émises. L'énergie est ainsi stationnaire et reste localement emprisonnée, ce qui permet de détecter à proximité du transducteur la formation d'une couche de givre, mais également d'autres informations, telles que son épaisseur. Pour cette étape de détection du givre, le transducteur est d'abord un actionneur qui émet, pendant une durée qui peut être très courte ou s'étendre sur plusieurs secondes, des ondes sonores ayant une vitesse de groupe nulle ou sensiblement nulle. Ensuite le transducteur devient un capteur qui réceptionne les ondes retours, avec un phénomène de résonnance qui peut être long, et qui permet de traiter l'information liée.

Avantageusement, l'étape de détection de la couche de givre est, au moins partiellement, réalisée via au moins deux transducteurs piézoélectriques, l'un des transducteurs piézoélectriques émettant des ondes sonores en direction de l'autre transducteur piézoélectrique.

Ainsi, les ondes sonores émises parcourent un trajet linéaire depuis le transducteur émetteur vers le transducteur récepteur. Si l'état de surface est différent d'un état de surface référence, les ondes sont altérées et transducteur récepteur le détecte. En fonction de la nature de l'altération des ondes reçues par le transducteur récepteur, il est possible d'en déduire la présence et la localisation d'une couche de givre sur le trajet linéaire qui sépare les deux transducteurs.

Ainsi, les deux étapes du procédé de l'invention sont réalisées par au moins un élément commun. Par conséquent, le coût énergétique, le coût de fabrication de la pièce et la complexification du processus de dégivrage sont davantage réduits.

Avantageusement, l'étape de détection de la couche de givre, au moins partiellement, est réalisée via au moins deux transducteurs piézoélectriques, les fréquences d'excitation appliquées aux transducteurs piézoélectriques étant modifiées successivement.

En modifiant successivement les fréquences d'excitation des transducteurs, un balayage peut être réalisé entre les nombreuses portions du corps principal comprises dans la zone de recoupement des rayons d'actions des deux transducteurs. Par conséquent, l'étape de détection peut être réalisée rapidement et avec précision, permettant de détecter les portions dans lesquelles le givre est présent grâce à la réception des ondes réfléchis par l'un ou par les deux transducteurs. Par la suite, sont déduites les fréquences d'excitation à appliquer aux transducteurs pour que ces derniers concentrent une émission d'ondes sonores dans la bonne direction de propagation, afin d'atteindre une à une les portions du corps principal contenant du givre.

L'invention sera mieux comprise à la lecture des figures annexées, qui sont fournies à titre d'exemples et ne présentent aucun caractère limitatif, dans lesquelles :
- les figure 1A, 1B et 1C sont des schémas illustrant différents types de transducteurs piézoélectriques utilisables pour les pièces et procédés selon l'invention ;
- les figure 2A et 2B sont des schémas illustrant le fonctionnement des transducteurs piézoélectriques des figures 1A, 1B et 1C en fonction de la variation des fréquences d'excitation ;
- la figure 3 est un schéma représentant une pièce de carrosserie selon un premier mode de réalisation de l'invention ;
- les figures 4 et 5 sont des schémas représentant chacun une pièce de carrosserie selon un deuxième mode de réalisation de l'invention ;
- la figure 6 est un schéma représentant un pare-chocs selon un troisième mode de réalisation de l'invention.

### Transducteur piézoélectrique

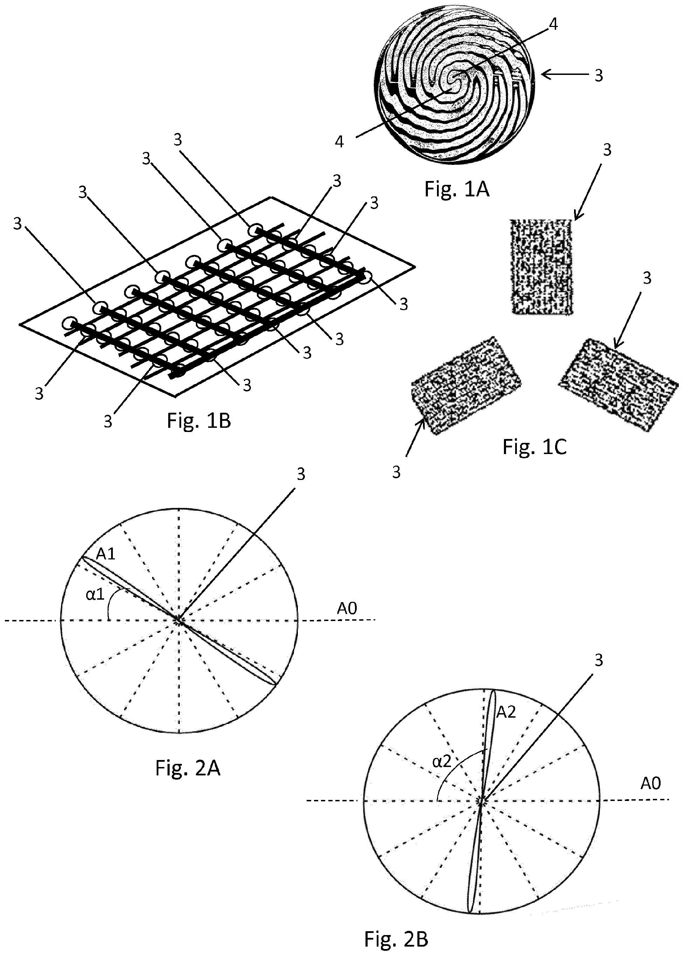

Un type de transducteur piézoélectrique 3 particulièrement adapté, pour la pièce de carrosserie de véhicule automobile et le procédé de dégivrage selon l'invention, est un transducteur 3du type FSAT (Frequency Steered Acoustic Transducers) avec deux électrodes 4 (figure 1A). Toutefois, des transducteurs piézoélectriques 3 disposés en réseau (figure 1B) ou en forme de rosettes (figure 1C) permettent également de concentrer l'émission des ondes afin d'obtenir un dégivrage satisfaisant. Nous décrivons ici un transducteur FSAT, utilisé selon un exemple de réalisation, pour les pièces et procédés de l'invention. Un tel transducteur 3 comprend généralement deux électrodes conductrices 4, par exemple métalliques, en argent ou tout autre matériau approprié, disposées sur un substrat diélectrique (une céramique, telle qu'une céramique Titano-Zirconate de Plomb (PZT), ou un film polymère, tel qu'un film en poly(fluorure de vinylidène) (PVDF). Les électrodes 4 peuvent être disposées sur le substrat diélectrique grâce notamment à un procédé de reproduction sérigraphique.

Un tel transducteur piézoélectrique 3 peut être configuré pour concentrer l'émission d'ondes de Lamb selon une direction de propagation ayant un angle de 0 à 180°, par référence à une direction de propagation initiale, en fonction d'une plage de fréquence d'excitation de 70 kHz à 140 kHz. D'autres plages de fréquence d'excitation sont envisageables selon les courbes de dispersion des ondes de Lamb pour la matière support considérée pour le corps principal.

Les figures 2A et 2B illustrent la variation de l'angle d'émission des ondes par rapport à la ligne horizontale A0 qui correspond à la direction de propagation des ondes lorsque le transducteur piézoélectrique 3 est excité à une fréquence de 70 kHz. Lorsque le transducteur piézoélectrique 3 est excité à une deuxième fréquence d'excitation d'environ 82 kHz, comme représenté à la figure 2A, le transducteur piézoélectrique 3 concentre l'émission des ondes sonores selon une direction de propagation A1. Autrement dit, l'excitation du transducteur 3 à une fréquence d'excitation d'environ 82 kHz se traduit par une variation angulaire (α1) d'émission des ondes et de leur direction de propagation A1 de plus de 30° par rapport à l'émission et à la direction de propagation initiale A0 des ondes émises lorsque le transducteur 3 est excité à une fréquence d'excitation de 70 kHz.

Lorsque le transducteur piézoélectrique 3 est excité à une troisième fréquence de 105 kHz (figure 2B), la variation de l'angle (α1) d'émission et de la direction de propagation A2 est supérieure à 90° par rapport à la direction de propagation initiale A0.

### Pièce de carrosserie et procédé dégivrage de l'invention

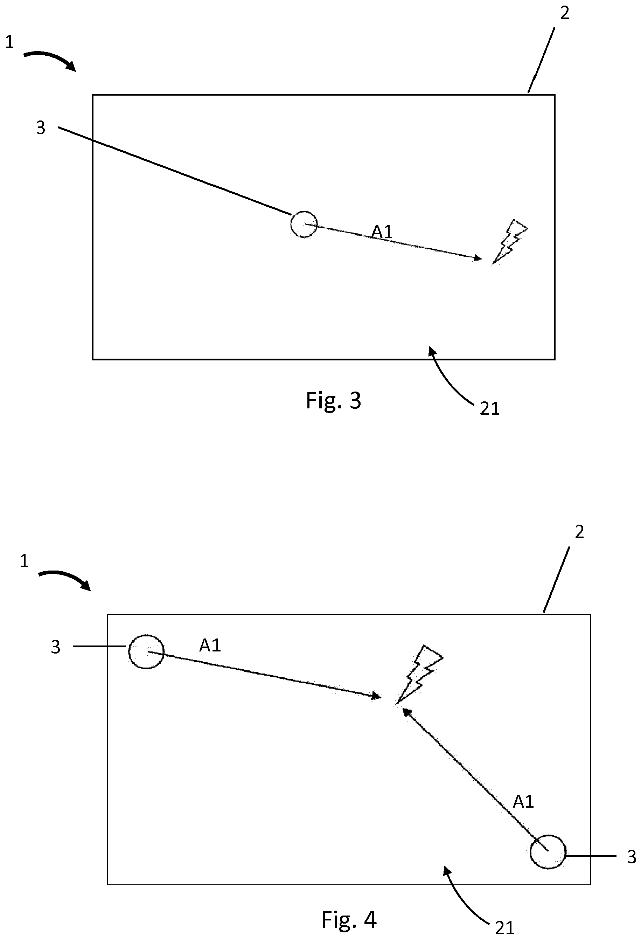

La figure 3 représente un premier mode de réalisation d'une pièce de carrosserie 1 de véhicule automobile (non représenté) selon l'invention. Cette pièce 1 comprend un corps principal 2 en matière plastique ayant au moins une face externe visible depuis l'extérieur du véhicule (non visible sur ces figures) lorsque la pièce est montée sur le véhicule et une face interne 21 opposée à la face externe. La pièce 1 comprend également au moins un transducteur piézoélectrique 3 configuré pour concentrer une émission d'ondes sonores selon un nombre fini de directions de propagation sur l'une au moins de la face externe ou de la face interne 21 du corps principal 2 en fonction d'une fréquence d'excitation donnée.

Ainsi, le transducteur piézoélectrique 3 positionné en position centrale du corps principal 2 permet de détacher efficacement le givre présent dans de nombreuses portions du corps principal 21, grâce à la concentration de l'émission d'ondes sonores expliquée précédemment. Dans ce mode de réalisation, presque toute la partie centrale de la face interne 21 peut ainsi être dégivrée avec la même efficacité, ce qui permet d'assurer le bon fonctionnement d'éléments tels que les radars ayant pour fonction de détecter les obstacles.

Dans cette position centrale, le transducteur 3 peut être excité tour à tour, avec des fréquences d'excitation différentes, ce qui permet finalement d'assurer un dégivrage permanent de la partie centrale de la face interne 21 du corps principal 2. Alternativement, cet unique transducteur 3 peut également être excité uniquement après qu'une couche de givre (symbolisée par l'éclair sur la figure 3) ait été détectée dans une portion de la face interne 21. Ainsi, il est possible d'appliquer la bonne fréquence d'excitation au transducteur 3 pour permettre un dégivrage localisé. Lorsqu'une seule couche de givre est détectée, il est donc nécessaire d'appliquer qu'une seule fréquence d'excitation, ce qui accélère le processus de dégivrage et réduit la consommation en énergie par rapport à un élément chauffant de l'art antérieur ou à un transducteur piézoélectrique 3 pour lequel plusieurs fréquences d'excitation sont appliquées successivement.

Dans une variante non représentée et qui s'applique à tous les modes de réalisation décrits, au moins un des transducteurs est surmoulé dans le corps principal 2 de la pièce.

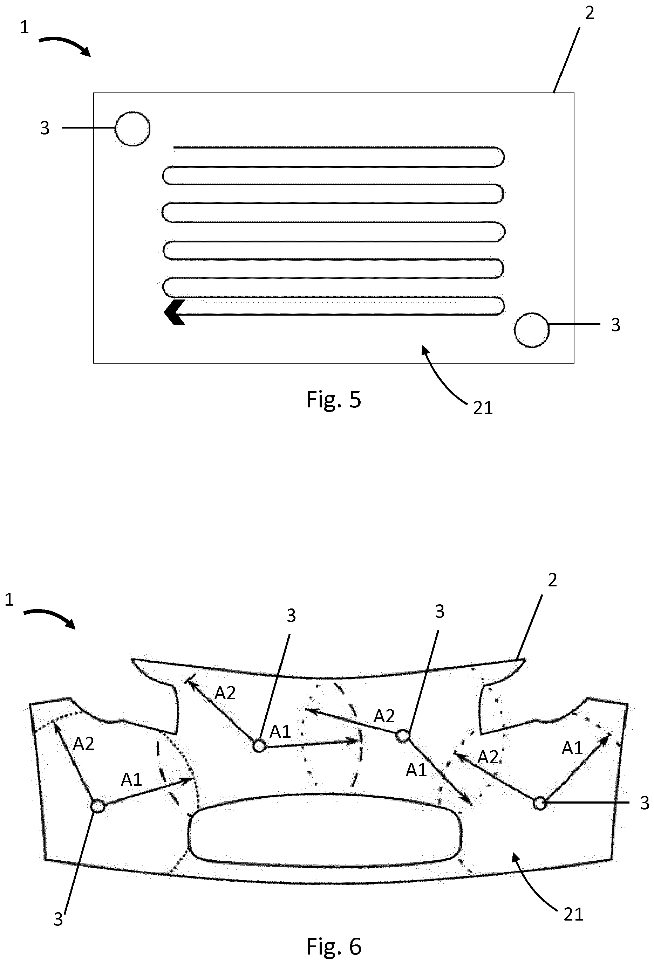

Dans un second mode de réalisation, représenté aux figures 4 et 5, la pièce de carrosserie 1 comprend deux transducteurs piézoélectriques 3 disposés en bordure de la face interne 21 du corps principal 2. Lors de la détection d'une couche de givre (symbolisée par l'éclair sur la figure 4), chacun des transducteurs piézoélectriques 3 se voit appliquer la fréquence d'excitation dont on sait qu'elle permet au transducteur piézoélectriques 3 de concentrer l'émission de ces ondes dans la direction de propagation A1. Les ondes émis par les transducteurs piézoélectriques 3 convergent ainsi vers la portion du corps principal 2 dans laquelle le givre a été détecté. La fréquence d'excitation et le moment de leur application sur les transducteurs piézoélectriques 3 sont calculés afin d'obtenir un effet cumulatif des ondes émises par les deux transducteurs piézoélectriques 3, ce qui permet l'apport d'une énergie de cisaillement plus importante dans la portion ciblée du corps principal 2. Les ondes sonores peuvent être émises par les transducteurs piézoélectriques 3 soit sous la forme d'une impulsion, c'est-à-dire l'émission d'une onde unique à une fréquence d'excitation donnée, soit sous la forme de train d'ondes, c'est-à-dire l'émission de plusieurs ondes identiques à une même fréquence donnée. Dans le cas de l'impulsion, l'application de la fréquence d'excitation est sporadique alors que pour le train d'ondes, cette application est continue dans le temps, pendant une durée définie.

Le positionnement des deux transducteurs piézoélectriques 3 en bordure du corps principal 2 offre plusieurs avantages. Il permet de s'affranchir des ondes émises dans le sens de propagation opposé au sens de propagation d'intérêt. En effet, les ondes émises dans le sens de propagation opposées ne couvrent qu'un faible trajet avant d'arriver à la bordure du corps principal 2 et de se dissiper. Cela permet de laisser libre une grande partie du corps principal 2 de la pièce 1, partie dans laquelle ne se trouve ni les transducteurs piézoélectriques 3, ni les ondes émises dans le sens de propagation opposé au sens de propagation d'intérêt. Cela permet aussi d'éviter la perturbation d'éléments tels que les radars, qui sont préservés d'ondes pouvant parasiter leur fonctionnement.

De plus, un tel positionnement des transducteurs piézoélectriques 3 permet un balayage de la partie centrale du corps principal 2, comme représenté par le chemin fléché de la figure 5. Ainsi, en modifiant successivement et de manière appropriée les fréquences d'excitation appliquées aux deux transducteurs piézoélectriques 3, il est possible d'opérer un dégivrage très efficace de la partie centrale du corps principal 2, selon le sens indiqué par la flèche du chemin fléché de la figure 5, ou selon le sens inverse, en faisant converger tour à tour les émissions d'ondes des deux transducteurs piézoélectriques 3. Cumulativement, lorsque les transducteurs piézoélectriques 3 ont également pour fonction la détection du givre dans la pièce 1, un tel balayage permet de cibler rapidement et efficacement les portions du corps principal 2 contenant du givre. Par la suite, il est alors possible d'appliquer les fréquences d'excitation adaptée, comme représenté à la figure 4.

La figure 6 représente un troisième mode de réalisation de l'invention dans lequel la pièce de carrosserie 1 est un pare-chocs 1. Le corps principal du pare-chocs 1 est pourvu de quatre transducteurs piézoélectriques 3 répartis sur sa face interne 21, afin de pouvoir dégivrer la quasi-totalité de la pièce, et ce, malgré la présence d'une ouverture centrale 22 nécessaire à l'entrée d'air dans le véhicule (non représenté). Chaque rayon d'action des transducteurs piézoélectriques 3 est représenté par des pointillés de nature différente qui permettent son identification et son rattachement au transducteur piézoélectrique 3 correspondant.

Il apparait donc, dans ce mode de réalisation, que seules quelques petites portions en bordure du corps principal 2 ne sont pas atteintes par les ondes d'au moins l'un des transducteurs piézoélectriques 3. Bien entendu, le nombre et la disposition des transducteurs piézoélectriques 3 peuvent être adaptés afin de couvrir l'intégralité de la surface du corps principal 2, si cela s'avère nécessaire.

Ainsi, le balayage décrit pour le second mode de réalisation (figure 4) peut être appliqué à chaque paire adjacente de transducteurs piézoélectriques 3 présente sur le corps principal 2 du pare-chocs 1 de manière à dégivrer et/ou à détecter la présence de givre de manière encore plus efficace et précise que dans le second mode de réalisation de l'invention.

Selon l'invention, on dégivre une pièce de carrosserie 1 comme suit.

On déduis la présence d'une couche de givre sur au moins une portion d'une surface de la pièce 1 selon une méthode classique connue de l'homme du métier ou, de manière préférentielle, on détecte cette couche de givre grâce à l'un au moins des transducteurs piézoélectriques 3 de la pièce 1.

Cette détection par l'un au moins des transducteurs piézoélectriques 3 de la pièce 1 peut être réalisée par les méthodes suivantes, seules ou en combinaisons :
- on applique sur l'un au moins des transducteurs piézoélectriques 3 une fréquence d'excitation ayant pour résultat que le transducteur piézoélectrique 3 émettent des ondes ayant une vitesse de groupe nulle ou sensiblement nulle ;
- on applique une fréquence d'excitation sur un transducteur piézoélectrique 3 afin qu'il concentre une émission d'ondes sonores en direction d'un seconde transducteur piézoélectrique 3 qui joue le rôle de capteur piézoélectrique ;
- on applique successivement des fréquences d'excitation à deux transducteurs piézoélectriques 3 afin d'effectuer un balayage des portions de la pièce 1 figurant dans la zone de recoupement des rayons d'action des deux transducteurs piézoélectriques 3.

Ensuite, on applique une fréquence d'excitation prédéfinie sur au moins un transducteur piézoélectrique 3 de la pièce 1 en fonction de la position, par rapport audit transducteur 3, de la portion de la pièce 1 dans laquelle la couche de givre a été détectée.

Lorsque la pièce est pourvue d'au moins deux transducteurs piézoélectriques 3, les fréquences d'excitation des deux transducteurs piézoélectriques 3 sont appliquées de manière à ce que les transducteurs 3 émettent des ondes sonores qui convergent vers la portion de la pièce 1 dans laquelle la couche de givre a été détectée et qui ont un effet cumulatif.

### Liste des références

- 1: : pièce de carrosserie
- 2: : corps principal
- 3: : transducteur piézoélectrique
- 4: : électrode
- 21: : face interne
- 22: : ouverture
- A1: : direction de propagation des ondes émises en fonction d'une première fréquence d'excitation
- A2: : direction de propagation des ondes émises en fonction d'une seconde fréquence d'excitation

## Revendications

1. Pièce de carrosserie (1) de véhicule automobile, **caractérisée en ce qu'**elle comprend :
- un corps principal (2) en matière plastique ayant au moins une face externe visible depuis l'extérieur du véhicule lorsque la pièce est montée sur le véhicule, et une face interne (21) opposée à la face externe ;
- au moins un transducteur piézoélectrique (3) configuré pour concentrer une émission d'ondes sonores selon un nombre fini de directions de propagation (A1, A2) sur l'une au moins de la face externe ou de la face interne (21) du corps principal (2) en fonction d'une fréquence d'excitation donnée.

2. Pièce (1) selon la revendication 1, dans laquelle le nombre fini de directions de propagation (A1, A2) est égal à un.

3. Pièce (1) selon la revendication 1 ou 2, comprenant au moins un transducteur piézoélectrique additionnel (3).

4. Pièce (1) selon la revendication précédente, dans laquelle le transducteur piézoélectrique additionnel (3) est configuré pour concentrer une émission d'ondes sonores selon un nombre fini de directions de propagation (A1, A2) sur le corps principal (2) en fonction d'une fréquence d'excitation donnée.

5. Pièce (1) selon l'une quelconque des revendications précédentes, dans laquelle l'un au moins des transducteurs piézoélectriques (3) est fixé sur la face externe ou la face interne (21) du corps principal (2) ou est surmoulé dans le corps principal (2).

6. Pièce (1) selon l'une quelconque des revendications 1 à 5, dans lequel les ondes sonores émises sont des ondes ultrasonores, de préférence des ondes de Lamb.

7. Procédé de dégivrage d'une pièce de carrosserie (1) de véhicule automobile **caractérisé en ce qu'**il comprend les étapes suivantes :
- détection d'une couche de givre sur au moins une portion d'une face de la pièce (1) ;
- application d'une fréquence d'excitation prédéfinie sur au moins un transducteur piézoélectrique (3) de la pièce en fonction de la position, par rapport audit transducteur piézoélectrique (3), de la portion de la face de la pièce (1) dans laquelle la couche de givre a été détectée, ledit transducteur piézoélectrique (3) étant configuré pour concentrer une émission d'ondes sonores selon un nombre fini de directions de propagation (A1, A2) sur la face de la pièce (1) en fonction de la fréquence d'excitation appliquée.

8. Procédé selon la revendication précédente, dans lequel les fréquences d'excitation d'au moins deux transducteurs piézoélectriques (3) sont appliquées de manière à ce que les transducteurs piézoélectriques (3) émettent des ondes sonores qui convergent vers la portion de la face de la (1) pièce dans laquelle la couche de givre a été détectée et qui ont un effet cumulatif.

9. Procédé selon la revendication 7 ou 8, dans lequel l'étape de détection de la couche de givre est réalisée via au moins l'un des transducteurs piézoélectriques (3).

10. Procédé selon la revendication précédente, dans lequel le transducteur piézoélectrique (3) qui réalise l'étape de détection de la couche de givre émet des ondes sonores ayant une vitesse de groupe nulle ou sensiblement nulle.

11. Procédé selon la revendication 9 ou 10, dans lequel l'étape de détection de la couche de givre est, au moins partiellement, réalisée via au moins deux transducteurs piézoélectriques (3), l'un des transducteurs piézoélectriques (3) émettant des ondes sonores en direction de l'autre transducteur piézoélectrique (3).

12. Procédé selon la revendication 9, dans lequel l'étape de détection de la couche de givre est au moins partiellement réalisée via au moins deux transducteurs piézoélectriques (3), les fréquences d'excitation appliquées aux transducteurs piézoélectriques (3) étant modifiées successivement.
